# EUROPEAN PATENT SPECIFICATION

(11) **EP 2 804 145 B1**
(45) Date of publication and mention of the grant of the patent: **01.03.2017**
(21) Application number: 14166240.3
(22) Date of filing: 28.04.2014
(51) Int. Cl.: G06T 3/40, G02B 21/36, G02B 21/00, G06K 9/20

(54) **Microscope system and stitched area decision method**
Mikroskopsystem und Entscheidungsverfahren für genähten Bereich
Système de microscope et procédé de décision de zone cousue

(30) Priority: 14.05.2013 JP 2013102271
(43) Date of publication of application: 19.11.2014
(73) Proprietor: Olympus Corporation, Tokyo 192-8507 (JP)
(72) Inventor: Furuhata, Tsuyoshi, Hachioji-shi, Tokyo 192-8507 (JP)
(74) Representative: Gunzelmann, Rainer

(56) References cited:
- WO-A1-01/54052
- WO-A1-98/02843
- WO-A1-2009/137935
- US-A1- 2012 044 342
- LYNN M. FLETCHER ET AL: "Method for image equalization of ROI fluoroscopic images using mask localization, selection and subtraction", COMPUTERIZED MEDICAL IMAGING AND GRAPHICS, vol. 20, no. 2, 1 March 1996 (1996-03-01), pages 89-103, XP055130065, ISSN: 0895-6111, DOI: 10.1016/0895-6111(96)00028-6
- OLYMPUS IMS: 'OLYMPUS Stream - Automated Stitched Image Acquisition', [Online] 07 March 2013, XP054976392 Retrieved from the Internet: <URL:https://www.youtube.com/watch?v=HkFysp O4zp0> [retrieved on 2016-02-25]

## Description

### Background of the Invention

### Field of the Invention

The present invention relates to a microscope system for generating a stitched image where a plurality of images are stitched, and a stitched area decision method.

### Description of the Related Art

In a microscope field, a technique for generating a wide-field image (hereinafter referred to as a stitched image), in which an image of an area wider than a field of view of a device is captured, by stitching a plurality of images obtained by capturing images of different areas of a sample is known.

With this technique, a stitched image having a higher resolution is generated as an objective lens having a higher magnification is used to obtain a plurality of images (hereinafter referred to as component images) that configure the stitched image. In the meantime, the field of view of the device becomes narrower as the magnification of the objective lens increases, so that the number of component images grows, and the length of time needed to generate a stitched image increases.

A technique related to such a technical problem is disclosed, for example, by Japanese Laid-open Patent Publication No. 2004-101871. A microscope image photographing device disclosed by Japanese Laid-open Patent Publication No. 2004-101871 partitions image information in which a size of a field of view is of a low magnification, which is obtained with an objective lens having a low magnification, into image information in which a size of a field of view is of a high magnification, corresponding to a size of a field of view of an objective lens having a high magnification, examines whether or not a sample image is present within each image piece of information in which the size of the field of view is of the high magnification, and obtains image information of high precision with the objective lens having the high magnification only for a portion of the field of view of the high-magnification where the sample image is determined to be present.

Accordingly, by using the technique disclosed by Japanese Laid-open Patent Publication No. 2004-101871, the number of component images obtained with an objective lens having a high magnification can be reduced.

However, the microscope image photographing device disclosed by Japanese Laid-open Patent Publication No. 2004-101871 partitions the entire surface of a slide glass into portions that are the size of a field of view of an objective lens having a low magnification before the device obtains image information of a high precision (component images) with an objective lens having a high magnification, and obtains image information of each partitioned area with the objective lens having the low magnification. Namely, even image information of an area that a user recognizes to be unnecessary is uniformly obtained with an objective lens having a low magnification, and whether or not to obtain image information of a high precision (component images) with an objective lens having a high magnification is determined on the basis of the obtained image information. Accordingly, the length of time needed to generate a stitched image is not sufficiently reduced even though the number of component images obtained with the objective lens having the high magnification decreases.

Document WO 2009/137935 A1 relates to the fields of confocal and non-confocal imaging of large microscope specimens with particular emphasis on scanning beam fluorescence and photoluminescence imaging systems, including multi-photon fluorescence, spectrally-resolved fluorescence, and second and third harmonic imaging. A first prior art embodiment shows a confocal scanning laser microscope including a motor-driven scanning stage and a computer represented by a computer screen. A third prior art embodiment of a scanning laser microscope includes a scanning stage like that of the first prior art embodiment and a detector, the output of which is sent to a computer like that of first prior art embodiment.

Document US 2012/044342 A1 relates to a digital microscope. A system for examining a sample such as a tissue sample includes a computer. Connected to the computer is a display configured to display information transmitted from the computer. Connected to the computer is further a digital microscope, which includes one or several imaging systems with sensors and a stage translatable in x-, y- and z-directions. The system further comprises a slide carrier. A user can choose a scan display mode, which describes how system will show individual camera fields of view or tiles during a scan. Depending on a selected display mode, the system either shows current tiles or a entire scan area.

Document WO 01/54052 A1 relates to a method of and an apparatus for viewing microscopic images, which include transmitting tiled microscopic images from a server to a client, wherein the client assembles the tiled images into a seamless virtual slide or specimen image and provides tools for manipulating an image magnification and a viewpoint.

Document WO 98/02843 A1 relates to a method for acquisition, mosaicking, cueing and interactive review of large-scale transmission electron micrograph composite images, wherein individual frames are automatically registered and mosaicked together into a single virtual image composite that is then used to perform automatic cueing of
axons and axon clusters, as well as review and marking by qualified neuroanatomists.

In view of the circumstances described above, the present invention aims at providing a technology in which the length of time needed to generate a stitched image can be reduced.

### Summary of the Invention

This aim is achieved by the subject-matter of the independent claims.

One aspect of the present invention provides a microscope system for generating a stitched image by stitching a plurality of component images. The microscope system includes: an image obtainment unit configured to obtain an image of a sample; a field-of-view moving unit configured to move a field of view of the image obtainment unit relatively to the sample; a recommended area decision unit configured to determine, according to an instruction of a user, a recommended area from an entire area, wherein the recommended area is an area to be put into an image as the stitched image, and the entire area is an area of the sample in which the field of view of the image obtainment unit moved by the field-of-view moving unit is movable; and a component area decision unit configured to determine, as a plurality of component areas from which the plurality of component images are obtained, a plurality of areas which are arranged in a form of a grid in the recommended area so that the recommended area determined by the recommended area decision unit is filled, the plurality of areas respectively having a same size as the field of view of the image obtainment unit and overlapping at least part of the recommended area.

Another aspect of the present invention provides a method for determining a stitched area of a microscope system that includes an image obtainment unit and a display unit, and that generates a stitched image by stitching a plurality of component images. the method includes: causing the display unit to display a live image which is the newest image of an area corresponding to a current field of view of the image obtainment unit and is an image of a sample obtained by the image obtainment unit, and to display a position of the area corresponding to the current field of view of the image obtainment unit in an entire area, wherein the entire area is an area of the sample in which the field of view of the image obtainment unit is movable; determining, according to an instruction of a user, a recommended area from the entire area, wherein the recommended area is an area to be put into an image as the stitched image; determining, as a plurality of component areas, a plurality of areas which are arranged in a form of a grid in the recommended area so that the determined recommended area is filled, the plurality of areas respectively having a same size as the field of view of the image obtainment unit and overlapping at least part of the recommended area; and deciding an area composed of the plurality of component areas to be the stitched area.

### Brief Description of Drawings

The present invention will be more apparent from the following detailed description when the accompanying drawings are referenced.
FIG. 1 illustrates a configuration of a microscope system according to a first embodiment of the present invention;
FIG. 2 is a block diagram illustrating a hardware configuration of a control device included in the microscope system illustrated in FIG. 1;
FIG. 3 is a flowchart illustrating steps of a stitched area decision process executed in the microscope system illustrated in FIG. 1;
FIG. 4 illustrates an example of a screen displayed on a display device included in the microscope system illustrated in FIG. 1;
FIG. 5 is an explanatory diagram of a recommended area decision process;
FIG. 6 is an explanatory diagram of a component area decision process executed when a band scanning function is set to OFF;
FIG. 7 is an explanatory diagram of a component area decision process executed when the band scanning function is set to ON;
FIG. 8 is another explanatory diagram of the component area decision process executed when the band scanning function is set to ON;
FIG. 9 is a flowchart illustrating steps of a stitched area decision process executed in a microscope system according to a second embodiment of the present invention;
FIG. 10 is an explanatory diagram of a component area change process;
FIG. 11 is another explanatory diagram of the component area change process;
FIG. 12 is a further explanatory diagram of the component area change process;
FIG. 13 illustrates a state where a plurality of stitched areas are determined;
FIG. 14 illustrates a state where the plurality of stitched areas illustrated in FIG. 13 are combined;
FIG. 15 illustrates an example of an image displayed in an image display area of a microscope system according to a third embodiment of the present invention;
FIG. 16 is a block diagram illustrating functions of a control device of the microscope system according to the third embodiment of the present invention;
FIG. 17 is a flowchart illustrating steps of a stitched area decision process executed in a microscope system according to a fourth embodiment of the present invention;
FIG. 18 is a perspective view of a sample observed by the microscope system according to the fourth embodiment of the present invention;
FIG. 19 is an explanatory diagram of a recommended area decision process; and
FIG. 20 is an explanatory diagram of a component area decision process.

### Description of the Embodiments

### <First embodiment>

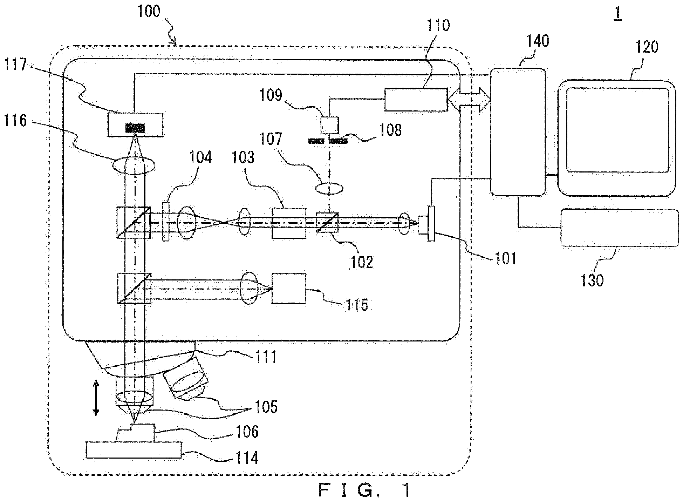

FIG. 1 illustrates a configuration of a microscope system 1 according to this embodiment of the present invention. The microscope system 1 is a microscope system for generating a stitched image by obtaining a plurality of confocal images by capturing images of different areas of a sample, and by stitching the confocal images according to a position relationship among the areas from which the confocal images are captured.

As illustrated in FIG. 1, the microscope system 1 includes a confocal microscope main body 100, a display device 120, an input device 130, and a control device 140.

The confocal microscope main body 100 includes a laser light source 101, a polarized beam splitter (hereinafter abbreviated to PBS) 102, a two-dimensional scanning unit 103 for scanning a sample 106, a 1/4 λ plate 104, objective lenses 105 for illuminating the sample 106 with light, an tube lens 107, a pinhole plate 108, a photodetector 109, an AD converter 110, a revolver 111, an X-Y stage 114, a white light source 115, an tube lens 116, and a CCD camera 117.

The revolver 111 is means for switching the objective lens 105, and is also Z position change means for changing a relative distance between the objective lens 105 and the sample 106. Moreover, the X-Y stage 114 is XY position change means for moving the sample 106 in a direction orthogonal to an optical axis of the objective lens 105 with respect to the objective lens 105.

Laser light emitted from the laser light source 101 is incident to the two-dimensional scanning unit 103 after passing through the PBS 102. The two-dimensional scanning unit 103 is, for example, a galvano mirror. The sample 106 is illuminated with the laser light deflected by the two-dimensional scanning unit 103 after the laser light is converted from linearly polarized light into circularly polarized light by the 1/4 λ plate 104 and passes through the objective lens 105 attached to the revolver 111.

In the confocal microscope main body 100, the two-dimensional scanning unit 103 is arranged at a position optically conjugate with a pupil position of the objective lens 105. Accordingly, the two-dimensional scanning unit 103 deflects the laser light, so that a light gathering position of the laser light moves in an XY direction on a focal plane of the objective lens 105, and the sample 106 is two-dimensionally scanned by the laser light.

Here, two-dimensional scanning performed by the two-dimensional scanning unit 103, switching of the objective lens 105 arranged on the optical path of the confocal microscope main body 100 by rotating and driving the revolver 111, driving of the revolver 111 in an optical axis direction (Z direction) of the objective lens 105, and driving of the X-Y stage 114 in a direction (XY direction) orthogonal to the optical axis of the obj ective lens 105 are controlled by the control device 140. As a method of the two-dimensional scanning performed by the two-dimensional scanning unit 103, raster scanning, generally used in a confocal microscope, is employed.

The laser light reflected on a surface of the sample 106 (hereinafter referred to as reflected light) is incident to the PBS 102 via the two-dimensional scanning unit 103 after the laser light is converted from circularly polarized light into linearly polarized light by the 1/4 A plate 104 to which the laser light is incident via the objective lens 105. At this time, the reflected light incident to the PBS 102 has a polarization plane orthogonal to that of the laser light incident from the side of the laser light source 101 to the PBS 102. Therefore, the laser light is reflected by the PBS 102, and is guided to the tube lens 107.

The tube lens 107 gathers the reflected light reflected by the PBS 102. On the pinhole plate 108 provided on a path of the reflected light from the PBS 102, a pinhole is formed at a position optically conjugate with the light gathering position of the laser light, which is formed on the focal plane of the objective lens 105. Accordingly, if a certain portion of the surface of the sample 106 is present at the light gathering position where the objective lens 105 gathers the laser light, the light reflected from this portion is gathered by the pinhole and passes through the pinhole. In the meantime, if the certain portion of the surface of the sample 106 deviates from the light gathering position of the laser light in which the objective lens 105 gathers the laser light, the light reflected from this portion does not gather at the pinhole. Therefore, the light does not pass through the pinhole, and is blocked by the pinhole plate 108.

The light that has passed through the pinhole is detected by the photodetector 109. The photodetector 109 is, for example, a photo multiplier tube (PMT). The photodetector 109 receives the light that has passed through the pinhole, namely, the light reflected from the portion of the surface of the sample 106, the surface of the sample 106 is present at the light gathering position of the laser light formed by the objective lens 105. The photodetector 109 outputs a detection signal of a size according to a quantity of the received light as a luminance signal that indicates the luminance of the portion. The luminance signal, which is an analog signal, is analog-to-digital converted by the AD converter 110, and is input to the control device 140 as luminance value information that indicates the luminance of the portion. The control device 140 generates a confocal image of the sample 106 on the basis of the luminance value information and information of the scanning position in the two-dimensional scanning performed by the two-dimensional scanning unit 103.

Namely, in the microscope system 1, the configuration from the laser light source 101 to the objective lens 105, the configuration from the objective lens 105 to the photodetector 109, the AD converter 110, and the control device 140 function as means for obtaining a confocal image.

In this embodiment, each of the component images that configure a stitched image is a confocal image. Accordingly, means for obtaining a confocal image, which is a component image, is hereinafter referred to as a component image obtainment unit. Moreover, an area on the sample 106 from which a component image is obtained is referred to as a component area, and an area on the sample 106 from which a stitched image composed of component images is obtained is referred to as a stitched area. Accordingly, the stitched area is composed of the components areas.

In contrast, light (white light) emitted from the white light source 115 is gathered at a pupil position of the objective lens 105 attached to the revolver 111, and the sample 106 is illuminated with it thereafter. As a result, the sample 106 is illuminated with Kohler illumination. The reflected light reflected on the surface of the sample 106 is incident to the tube lens 116, which then gathers this reflected light on a light-receiving plane of the CCD (Charge Coupled Device) camera 117.

The CCD camera 117 is a camera having the light-receiving plane at a position optically conjugate with the focal plane of the objective lens 105. The CCD camera 117 generates a non-confocal image of the sample 106 by capturing an image of the sample 106 with the reflected light gathered on the light-receiving plane. The generated non-confocal image is transmitted to the control device 140.

Namely, in the microscope system 1, the configuration from the white light source 115 to the objective lens 105, the configuration from the objective lens 105 to the CCD camera 117, and the control device 140 for controlling the CCD camera 117 function as means for obtaining a non-confocal image.

In this embodiment, a live image is obtained by capturing an image of an area corresponding to the current field of view as needed, and this live image is a non-confocal image. Accordingly, the means for obtaining a non-confocal image is hereinafter referred to as a live image obtainment unit. Here, the live image is an image of the sample 106 obtained by the live image obtainment unit, and is the newest image of an area corresponding to the current field of view of the live image obtainment unit.

As described above, the microscope system 1 includes, as the image obtainment unit configured to obtain an image of the sample 106, the live image obtainment unit configured to obtain a live image, and the component image obtainment unit configured to obtain a component image. In other words, the image obtainment unit of the microscope system 1 includes the live image obtainment unit and the component image obtainment unit.

The display device 120 is, for example, a liquid crystal display device. The input device 130 is, for example, a mouse, a keyboard or the like. The display device 120 and the input device 130 may be configured integrally as a touch panel display device.

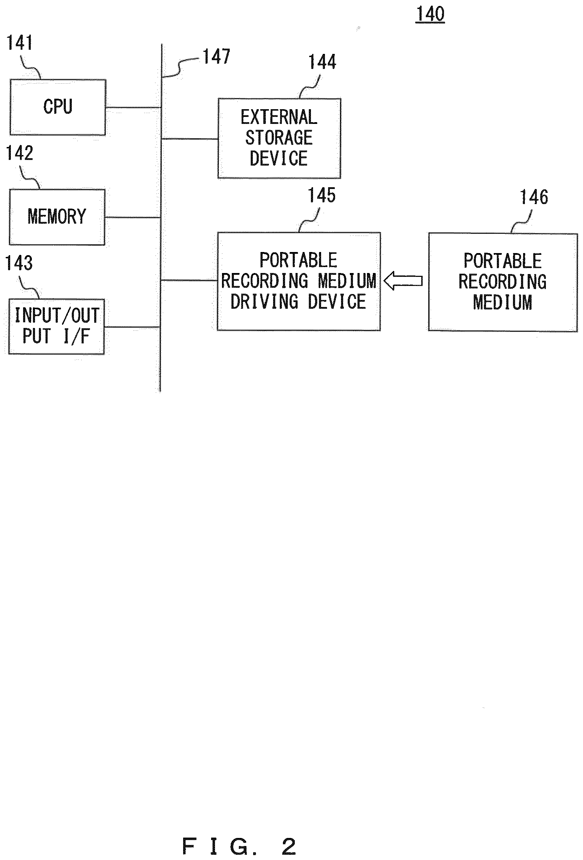

The control device 140 is a computer that executes a control program. As illustrated in FIG. 2, the control device 140 includes a CPU 141, a memory 142, an input/output I/F 143, an external storage device 144, and a portable recording medium driving device 145 that accommodates a portable recording medium 146. These components are interconnected by a bus 147, so that various types of data can be transmitted and received among the components. The CPU 141 loads the control program stored in the external storage device 144 or on the portable recording medium 146 into the memory 142 and executes the program so that the control device 140 controls the operations of the microscope system 1.

The memory 142 is, for example, a RAM (Random Access Memory). The input/output I/F 143 is an interface for transmitting and receiving to and from a device external to the control device 140, such as the confocal microscope main body 100, the display device 120, the input device 130, or the like. The external storage device 144 is intended to nonvolatilely store the control program, and information needed to execute the control program. The external storage device 144 is, for example, a hard disk device. The portable recording medium driving device 145 accommodates the portable recording medium 146 such as an optical disc, a compact flash (registered trademark) or the like. Similarly to the external storage device 144, the portable recording medium 146 is intended to nonvolatilely store the control program, and the information needed to execute the control program.

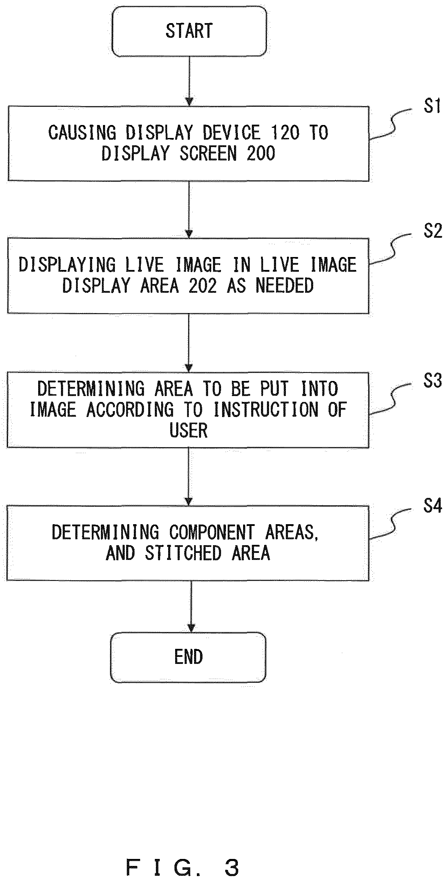

In the microscope system 1 configured as described above, a stitched area from which a stitched image is obtained is determined on the basis of a simple instruction issued from a user. Steps of a stitched area decision process are described below with reference to FIGs. 3 to 6.

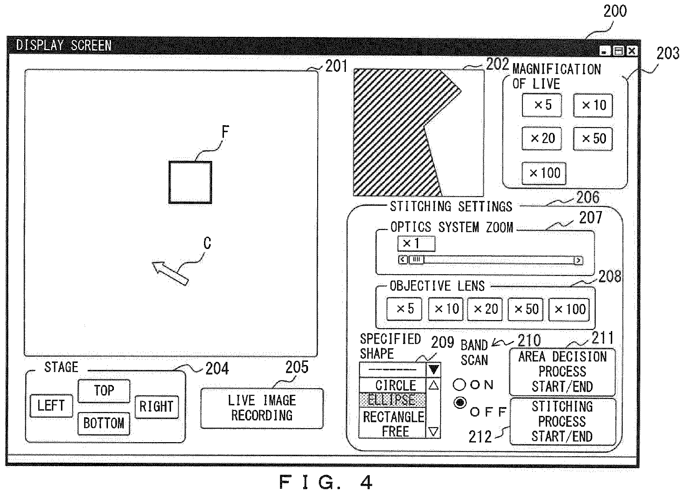

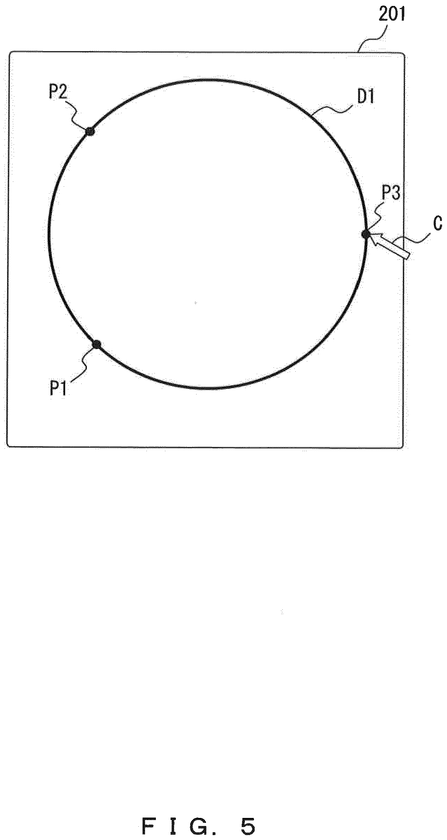

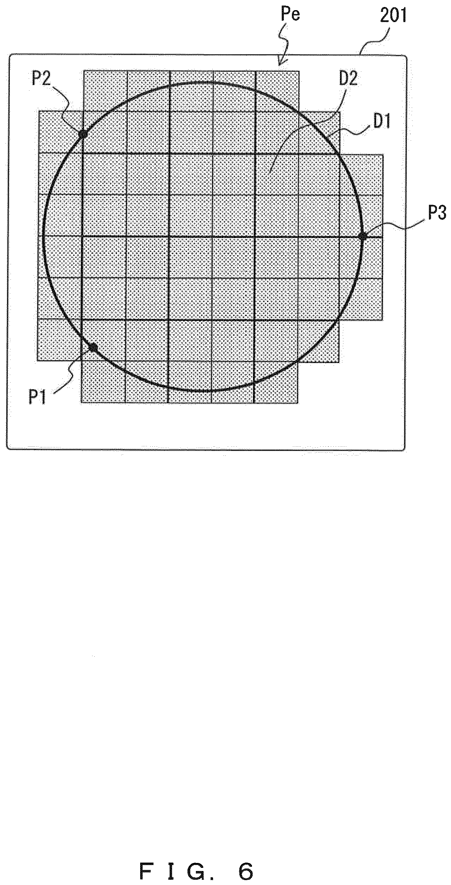

FIG. 3 is a flowchart illustrating the steps of the stitched area decision process executed in the microscope system 1. FIG. 4 illustrates an example of a screen 200 displayed on the display device 120 in the stitched area decision process. FIG. 5 is an explanatory diagram of a recommended area decision process executed in the stitched area decision process. FIG. 6 is an explanatory diagram of a component area decision process executed in the stitched area decision process.

The stitched area decision process illustrated in FIG. 3 is executed in a way such that the CPU 141 loads the control program stored in the external storage device 144 or on the portable recording medium 146 into the memory 142 and executes the program.

Once the stitched area decision process is started, the control device 140 causes the display device 120 to display, for example, a screen 200 illustrated in FIG. 4 (step S1 of FIG. 3: a GUI screen display process) . Thereafter, the control device 140 causes the display device 120 to display a live image (step S2 of FIG. 3: a live image display process). Namely, in this embodiment, the control device 140 is a display control unit configured to control the display device 120.

In step S2, a user initially specifies an observation magnification of a live observation by using an operation unit 203. Upon receipt of the specification, the control device 140 switches the objective lens 105 by controlling the revolver 111 so that the magnification of the live image obtainment unit is set to that specified by the user. Thereafter, the control device 140 controls the display device 120 to display the live image obtained by the live image obtainment unit in a live image display area 202 and also to display a live position frame F in an image display area 201. The live position frame F indicates, for example, the current position of the field of view of the live image obtainment unit within the entire area of the sample 106. Here, the entire area of the sample 106 signifies an area of the sample 106 in which the field of view of the live image obtainment unit moved by the X-Y stage 114 is movable. Note that also the live image obtained by the live image obtainment unit may be displayed within the live position frame F.

The user can verify the state of the sample 106 put on the X-Y stage 114 by checking the position where the live position frame F is displayed and by checking the live image while moving the X-Y stage 114 by operating the operation unit 204. In this embodiment, the X-Y stage 114, which is the XY position change means, is a field-of-view moving unit configured to move the field of view of the image obtainment unit relative to the sample 106. The display device 120 is a display unit configured to display the live image and the live position frame F.

Next, the control device 140 determines a recommended area, which is an area to be put into an image as a stitched image according to an instruction of the user (step S3 of FIG. 3: a recommended area decision process). Namely, in this embodiment, the control device 140 is a recommended area decision unit configured to determine a recommended area.

In step S3, the user initially specifies a magnification of an optical zoom and that of the objective lens which are used to obtain confocal images (component images) that configure a stitched image, by using an operation unit 207 and an operation unit 208. Upon receipt of this specification, the control device 140 changes settings of the two-dimensional scanning unit 103, and switches the objective lens 105. As a result, the size of the field of view of the component image obtainment unit is established.

Additionally, the user selects a shape of the recommended area and an ON/OFF state of the band scan function by using a drop-down list 209 and a radio button 210, and issues an instruction to start the area decision process by pressing a button 211. Here, a description is provided by assuming that the band scan function is set to OFF.

For example, if "circle" is selected as the shape of the recommended area in the drop-down list 209, the user specifies three points (a first point, a second point, and a third point) on the sample from the entire area by using a cursor C, so that the control device 140 determines the recommended area, an area on the sample 106, which is to be put into an image as a stitched image. Specifically, the user arbitrarily moves the X-Y stage 114 while checking the live image and the position where the live position frame F is displayed, specifies the first point, further moves the X-Y stage 114, and further specifies the second point and the third point. Note that a position of an already specified point may be, for example, deleted or modified by providing a stitching setting unit 206 with a button group for selecting a point on the sample (such as a point P1 specification button, a point P2 specification button, and a point P3 specification button), a reset button for canceling a point specified once, or the like. Alternatively, if "ellipse" or "rectangle" is selected as the shape of the recommended area in the drop-down list 209, the user specifies five points or three points on the sample from the entire area by using the cursor C, so that the control device 140 determines the recommended area, the area on the sample 106, which is to be put into the image as the stitched image. Additionally, if "free" is selected as the shape of the recommended area in the drop-down list 209, the user specifies three or more points on the sample from the entire area by using the cursor C, so that the control device 140 determines the recommended area, the area on the sample 106, which is to be put into the image as the stitched image.

FIG. 5 illustrates a state where the control device 140 determines to be the recommended area an inside of the circle that passes through the three points on the sample 106 which are specified by the user. Points P1, P2, and P3 are points in the image display area 201 which correspond to the three points specified by the user on the sample 106. An area D1 is an area in the image display area 201 which corresponds to the recommended area on the sample 106.

Upon completion of the recommended area decision process in step S3, the control device 140 determines component areas, and a stitched area composed of the component areas (step S4 of FIG.3: a component area decision process). Namely, the control device 140 is a component area decision unit configured to determine component areas.

In step S4, the control device 140 arranges a plurality of areas which respectively have the size of the field of view of the component image obtainment unit and overlap at least part of the recommended area, in the form of a grid in the recommended area so that the recommended area on the sample 106 which is determined in step S3 is filled. Then, the control device 140 determines the plurality of areas arranged in the form of the grid as a plurality of component areas.

Additionally, as illustrated in FIG. 6, the control device 140 controls the display device 120 so that a position image Pe indicating positions of a plurality of component areas is displayed by being superimposed on the area D1 corresponding to the recommended area of the image display area 201. Since the position image Pe is a translucent image, the area D1 corresponding to the recommended area can be visually identified through the position image Pe.

In FIG. 6, the areas D2 in the image display area 201, which correspond to the component areas of the sample 106, are respectively depicted as shaded areas. In FIG. 6, for simplification of illustration, the areas D2 are arranged without overlapping one another. Actually, however, these areas D2 are arranged to overlap by a designated amount. This is because a relative position relationship among confocal images (component images) is judged according to a pattern matching when a stitched image is generated. Also, subsequent drawings similarly illustrate examples where component areas are arranged without overlapping one another. However, the drawings are simplified for illustration, and actually, the component areas are arranged to overlap by the designated amount. The amount of overlapping can be set, for example, to between 1% and 50%.

Thereafter, when a user issues an instruction to terminate the area decision process by again pressing the button 211, the control device 140 determines that the whole area composed of the plurality of component areas is a stitched area, and terminates the stitched area decision process.

Then, the user presses the button 212 after the control device 140 determines the stitched area, so that images of the plurality of component areas that configure the stitched area are sequentially captured by the component image obtainment unit in the microscope system 1, and the stitched image where the plurality of thusly obtained component images (confocal images) are stitched is generated.

As described above, a stitched area is determined on the basis of an area that a user specifies while viewing a live image in the microscope system 1, thereby eliminating the need for capturing an image of the entire sample in advance. Accordingly, the length of time needed until the stitched area is determined can be reduced. Moreover, since the stitched area is determined on the basis of the area specified by the user, an image of a useless area that the user does not desire to put into an image is prevented from being captured when a stitched image is generated. Accordingly, the length of time needed to obtain component images that configure a stitched image can be reduced. Therefore, with the microscope system 1, the length of time needed to generate a stitched image can be made much shorter than that of conventional techniques.

Additionally, in the microscope system 1, an area can be specified with a simple operation such that a shape of a recommended area is selected and a few points are thereafter specified on a screen. Accordingly, even a user unfamiliar with the operation of a microscope can generate a stitched image by easily determining a stitched area with the use of the microscope system 1.

Furthermore, the microscope system 1 may generate a three-dimensional stitched image where three-dimensional images are stitched. In this case, the length of time needed to generate a stitched image tends to increase because a three-dimensional image needs to be generated by obtaining a plurality of confocal images at different Z positions for each component area. However, by determining a stitched area with the use of the above described stitched area decision method, the length of time needed to generate a stitched image can be significantly reduced.

The above provided description refers to the process executed when the band scan function is set to OFF. However, the length of time needed to generate a stitched image can be further reduced by setting the band scan function to ON. A process of step S4 executed when the band scan function is set to ON is described below.

In this case, the control device 140 arranges, in the form of a grid in the recommended area, a plurality of areas that respectively have the same size as the field of view of the component image obtainment unit and overlap at least part of a recommended area so that the recommended area on the sample 106 determined in step S3 is filled. Then, the control device 140 determines the plurality of areas arranged in the form of the grid to be a plurality of component areas. Up to this step, the process is the same as that executed when the band scan function is set to OFF.

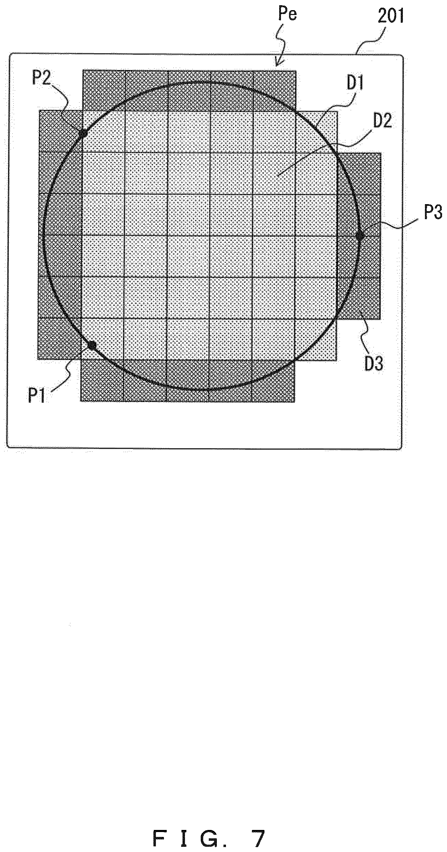

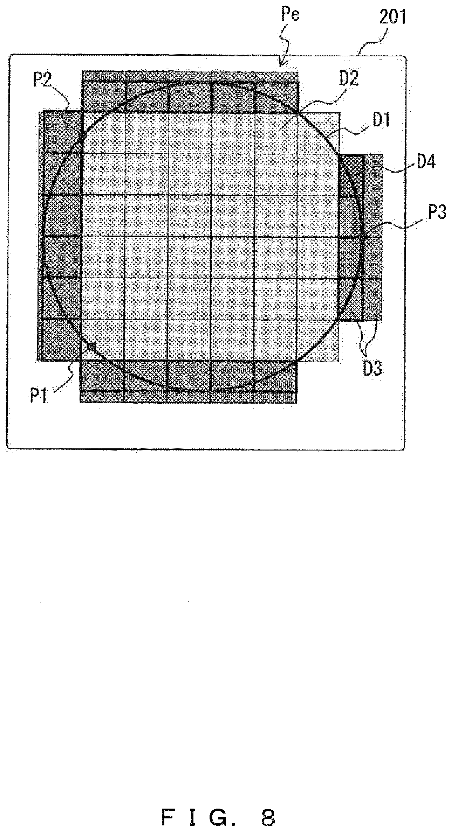

Thereafter, the control device 140 determines component areas arranged at the outermost rows and columns from among the plurality of component areas arranged in the form of the grid to be band scanning areas from which component images are obtained by scanning a partial area of the component areas with the two-dimensional scanning unit 103 as illustrated in FIG. 7. Moreover, the control device 140 determines part of the band scanning area to be a scanning range for each of the band scanning areas as illustrated in FIG. 8. Here, the scanning range is determined to include all of the overlapping portions between the band scanning areas and the recommended area. Lastly, as illustrated in FIG. 8, the control device 140 controls the display device 120 to display the plurality of component areas, the band scanning areas, and the position image Pe indicating the position of a scanning range by superimposing them on the area D1 corresponding to the recommended area of the image display area 201. Since the position image Pe is a translucent image, the area D1 corresponding to the recommended area can be visually identified through the position image Pe.

FIG. 7 illustrates a state where the component areas arranged at the outermost rows and columns among the plurality of component areas are determined as band scanning areas. FIG. 8 illustrates the state where part of the band scanning areas is determined as a scanning range. In FIGs. 7 and 8, the area D3 in the image display area 201, which corresponds to the band scanning area, is illustrated as a shaded area having a density different from that of the area D2 in the image display area 201, and this corresponds to a component area that is not a band scanning area. Moreover, FIG. 8 illustrates an area D4 in the image display area 201, which corresponds to the scanning range.

Thereafter, when a user issues an instruction to terminate the area decision process by again pressing the button 211, the control device 140 determines the whole area composed of the plurality of component areas to be a stitched area, and terminates the stitched area decision process.

Then, the user presses the button 212 after the stitched area is determined, so that images of the plurality of component areas that configure the stitched area are sequentially captured by the component image obtainment unit, and the stitched image where the plurality of thusly obtained component images are stitched is generated.

At this time, for the band scanning area, the component images are obtained by scanning not the entire field of view of the component image obtainment unit but only the scanning range determined for each of the band scanning areas. As a result, the length of time needed to obtain the component images can be reduced.

Since a component image obtained from a band scanning area, and that obtained from a component area that is not a band scanning area, are images obtained with the same observation magnification, resolutions of these component images are the same. Accordingly, by using the band scan function, the length of time needed to generate a stitched image can be reduced without degrading the quality of the stitched image.

FIGS. 7 and 8 illustrate the examples where the component areas arranged in the outermost rows and columns from among the plurality of component areas arranged in the form of the grid are determined to be the band scanning areas. However, the band scanning area decision method is not particularly limited to this one. A component area including an area outside a recommended area from among the plurality of component areas arranged in the form of the grid may be determined to be a band scanning area. For example, a component area arranged in at least one of the outermost rows or columns from among the plurality of component areas arranged in the form of the grid may also be determined to be a band scanning area.

In addition, the microscope system 1 can be modified in diverse ways. For example, FIG. 4 illustrates four types of shapes for a recommended area, a circle, an ellipse, a rectangle, and a free shape. However, the shape of the recommended area is not limited to these shapes. An arbitrary shape such as a triangle, a pentagon or the like may be employed. However, it is desirable that at least a circle or an ellipse can be selected. This is because the circle or the ellipse are shapes that enable a desired area of the sample 106 to be efficiently specified while reducing a square measure of a recommended area to a requisite minimum.

Additionally, in the microscope system 1, the control device 140 may determine a plurality of recommended areas according to an instruction issued from a user. In this case, the plurality of recommended areas may respectively have different shapes. Moreover, the control device 140 may determine a plurality of component areas for each of the plurality of determined recommended areas.

### <Second embodiment>

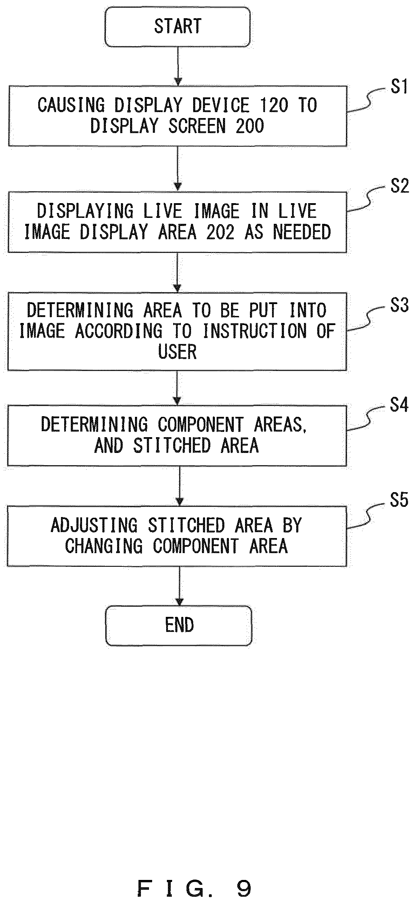

FIG. 9 is a flowchart illustrating steps of a stitched area decision process executed in the microscope system according to this embodiment. The microscope system according to this embodiment is different from the microscope system 1 according to the first embodiment in that a user can adjust a stitched area determined by the component area decision unit. Other points are the same as those of the microscope system 1. Accordingly, the same components as those of the microscope system 1 are denoted with the same reference numerals in this embodiment.

As illustrated in FIG. 9, processes from steps S1 to S4 are similar to those of the microscope system 1 according to the first embodiment. Thereafter, the control device 140 adjusts a stitched area by changing a component area according to an instruction issued from a user (step S5 of FIG. 9: a component area change process). Namely, the control device 140 is a component area change unit configured to change a component area.

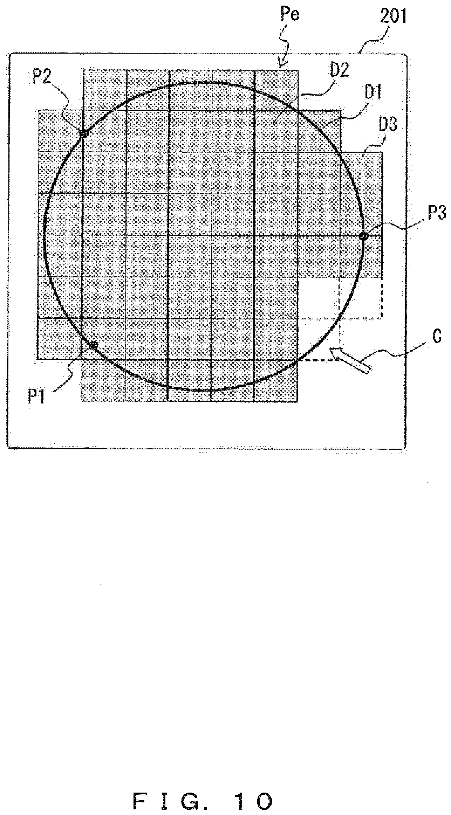

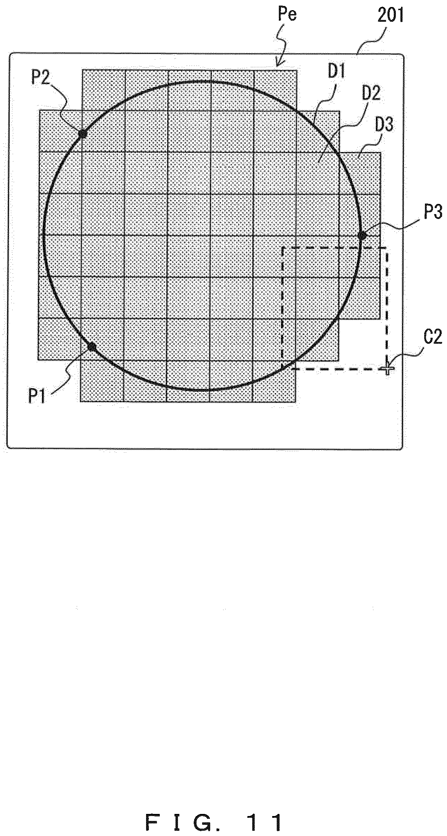

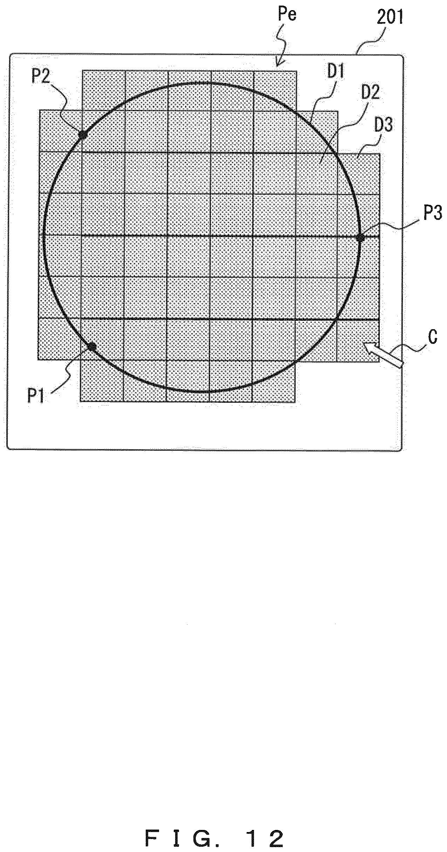

In step S5, the user verifies an image displayed in the image display area 201 illustrated in FIG. 6, and the control device 140 adjusts the stitched area by changing the component area on the basis of a manual operation of the user. The control device 140 may adjust the stitched area, for example as illustrated in FIG. 10, by changing an area specified with a click operation using the cursor C from among the plurality of component areas determined in step S4 to an area that is not a component area. Alternatively, as illustrated in FIG. 11, the control device 140 may adjust the stitched area by changing an area specified with a drag operation using a cursor C2 from among the plurality of component areas to an area that is a not a component area. Further alternatively, as illustrated in FIG. 12, the control device 140 may adjust the stitched area by changing an area having the same size as the field of view of the image obtainment unit, which is not a component area specified with the click operation using the cursor C, to a component area.

Thereafter, when the user issues an instruction to terminate the stitched area decision process by pressing the button 211 again, the control device 140 determines the whole area composed of the plurality of component areas after being adjusted to be a stitched area, and terminates the stitched area decision process.

Then, the user presses the button 212 after the stitched area is determined so that images of the plurality of component areas that configure the stitched area are sequentially captured by the component image obtainment unit and the stitched image where the plurality of thusly obtained component images are stitched is generated in the microscope system 1.

Also with the microscope system according to this embodiment, effects similar to those of the microscope system 1 according to the first embodiment can be achieved. Moreover, in the microscope system according to this embodiment, even if a stitched area determined on the basis of a recommended area is different from an intended area, the stitched area can be adjusted with a simple operation. Accordingly, the length of time needed to generate a stitched image can be reduced by more securely preventing an image of a useless area which a user does not desire to put into an image from being captured when the stitched image is generated.

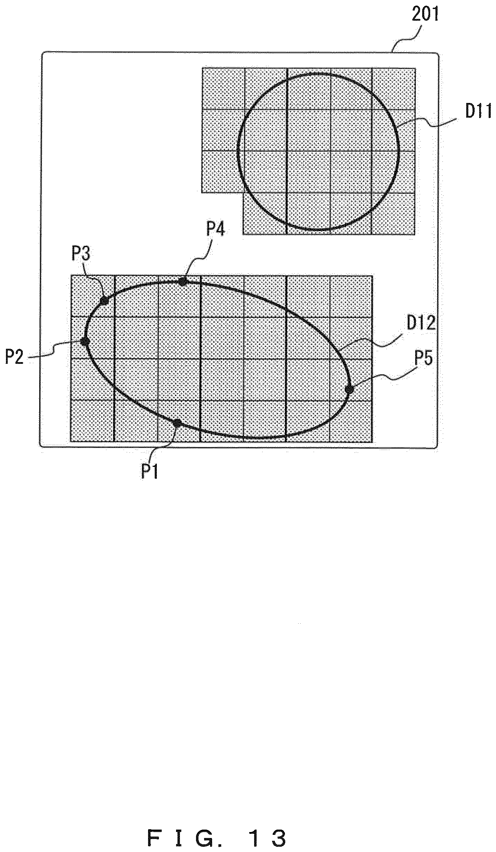

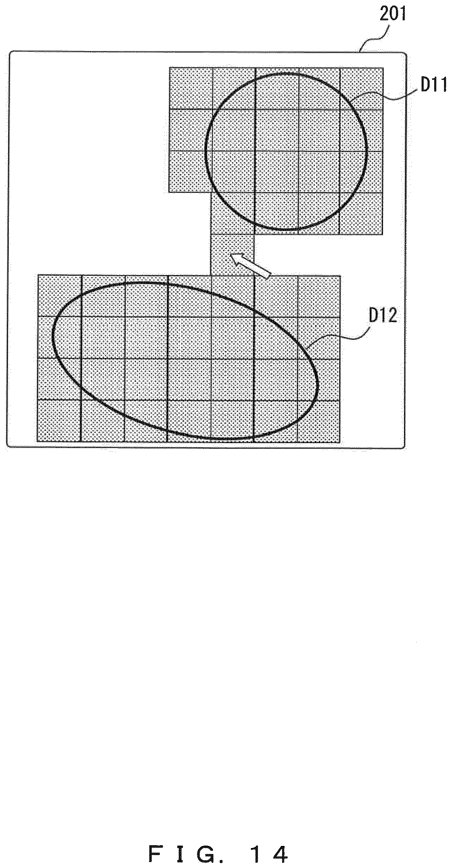

Additionally, with the microscope system according to this embodiment, a plurality of stitched areas can be combined into one stitched area by adding a component area as illustrated in FIG. 14 when the plurality of stitched areas are determined with the process of step S4 as illustrated in FIG. 13.

FIG. 13 illustrates a state where the control device 140 determines recommended areas shaped like a circle and an ellipse according to a specification of a user. FIG. 14 illustrates a state where the control device 140 combines a stitched area determined on the basis of the recommended area being shaped like a circle and a stitched area determined on the basis of the recommended area shaped being like an ellipse by adding a component area. In FIGS. 13 and 14, an area in the image display area 201 which corresponds to the recommended area shaped like a circle and an area in the image display area 201 which corresponds to the recommended area shaped like the ellipse are depicted respectively as areas D11 and D12.

Points P1 to P5 are points in the image display area 201 which correspond to five points specified by a user on the sample in order to establish an elliptical shape. The user specifies the five points (points P1 to P5) on the sample so that an area of the inside of the ellipse that passes through these five points is determined to be a recommended area shaped like an ellipse.

### <Third embodiment>

A microscope system according to this embodiment is different from the microscope systems according to the first and the second embodiments in that the microscope system has a function of generating a map image according to an instruction issued from a user, and of causing the display device 120 to display the generated map image. Other points are the same as those of the microscopes systems according to the first and the second embodiments. Accordingly, the same components as those of the microscope systems according to the first and the second embodiments are denoted with the same reference numerals in this embodiment.

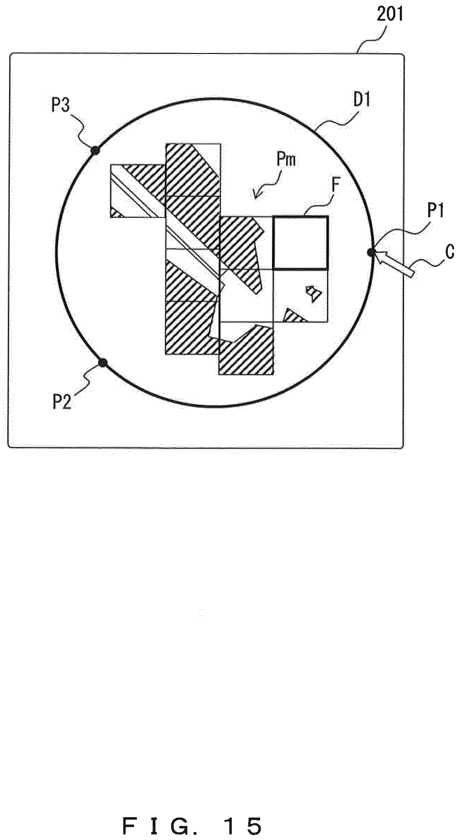

In the microscope system according to this embodiment, a user presses a button 205 of the screen 200 at a suitable timing while viewing a live image displayed in the live image display area 202, so that the control device 140 generates a still image from the live image obtained by the live image obtainment unit, and causes the generated still image to be displayed within the live position frame F. By repeating this operation, a map image Pm where a plurality of still images are arranged according to a sequence of areas from which a plurality of still images are captured is displayed in the image display area 201 as illustrated in FIG. 15. Alternatively, the map image Pm may be created by providing, for example, a start/end button for creating the map image Pm, by automatically generating still images at certain time intervals from when the start/end button is pressed until the start/end button is pressed again, and by displaying the still images within the live position frame F, as a replacement for the method for creating the map image Pm by repeatedly pressing the button 205 on the screen 200 at a suitable timing as described above. Then, the processes (the recommended area decision process and the component area decision process) in steps S3 and S4, which are described above in the first embodiment, are executed in the state where the map image Pm is displayed. Also, the above described process (the component area change process) of step S5, which is described above in the second embodiment, is executed.

Also with the microscope system according to this embodiment, effects similar to those of the microscope systems according to the first and the second embodiments can be achieved. Moreover, in the microscope system according to this embodiment, the state of the sample 106 can be grasped more accurately than that grasped in the microscope systems according to the first and the second embodiments, which grasp the state of the sample 106 on the basis of a live image. Therefore, a user can more accurately specify an area that the user himself desires to put into an image. Accordingly, with the microscope system according to this embodiment, an image of a useless area which a user does not desire to put into an image can be more securely prevented from being captured when a stitched image is generated, whereby the length of time needed to generate the stitched image can be reduced.

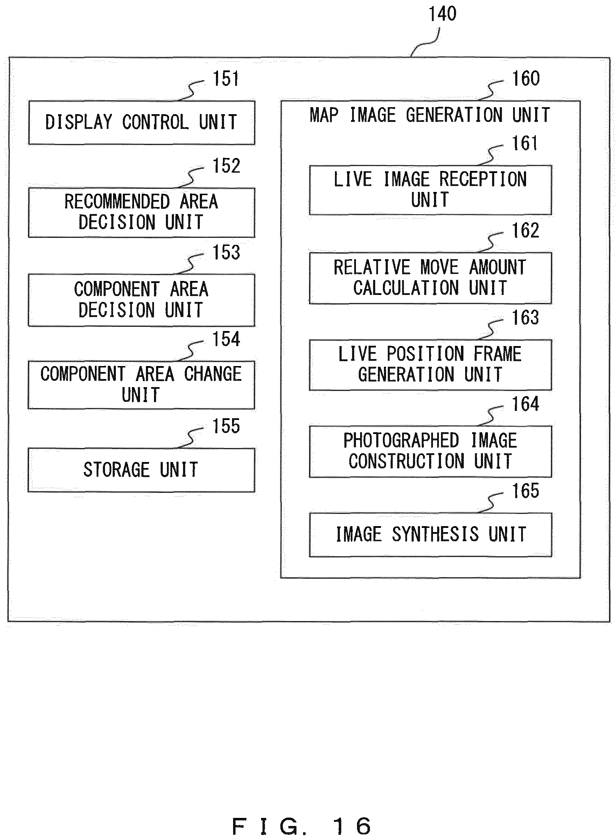

Here, operations of the control device 140 in the map image generation process are described. FIG. 16 is a block diagram illustrating functions of the control device 140. As illustrated in FIG. 16, the control device 140 includes a map image generation unit 160 in addition to the above described display control unit 151, recommended area decision unit 152, component area decision unit 153, component area change unit 154, and storage unit 155.

The map image generation unit 160 includes a live image reception unit 161, a relative move amount calculation unit 162, a live position frame generation unit 163, a photographed image construction unit 164, and an image synthesis unit 165.

The live image reception unit 161 receives a live image transmitted from the CCD camera 117 as needed, causes the storage unit 155 to store the received live image, and transmits the received live image to the relative move amount calculation unit 162 and the photographed image construction unit 164.

The relative move amount calculation unit 162 receives the live image transmitted from the live image reception unit 161, and calculates a relative move amount of the field of view with respect to the X-Y stage 114 by comparing with the immediately preceding received live image. Then, the relative move amount calculation unit 162 transmits the calculated relative move amount to the live position frame generation unit 163 and the image synthesis unit 165.

The live position frame generation unit 163 receives the relative move amount transmitted from the relative move amount calculation unit 162, calculates the current position of the field of view by adding the received relative move amount to a total of the already received relative move amounts, and transmits information of the current position to the display control unit 151 as position information of the live position frame. Upon receipt of this position information, the display control unit 151 displays the live position frame F at a position that indicates the current position of the field of view of the live image obtainment unit as illustrated in FIG. 15.

The photographed image construction unit 164 receives the live image transmitted from the live image reception unit 161 as needed. Then, the photographed image construction unit 164 generates a still image by executing various types of processes for the live image received at a timing when the button 205 illustrated in FIG. 4 is pressed, and transmits the generated still image to the image synthesis unit 165. Examples of the image processes executed by the photographed image construction unit 164 include an optical black subtraction process, a white balance adjustment process, a synchronization process, a color matrix computation process, a gamma correction process, a color reproduction process, and the like.

The image synthesis unit 165 receives the relative move amount transmitted from the photographed image construction unit 164, and calculates the current position of the field of view by adding the received relative move amount to a total of already received relative move amounts. Moreover, the image synthesis unit 165 receives the still image transmitted from the photographed image construction unit 164, and synthesizes the received still image at a position corresponding to the calculated current position of the field of view. As a result, a map image where a plurality of user images are arranged according to a sequence of areas (namely, the position of the field of view) from which user images are captured is generated. The image synthesis unit 165 transmits the generated map image Pm to the display control unit 151. Upon receipt of the map image Pm, the display control unit 151 displays the map image Pm in the image display area 201 as illustrated in FIG. 15.

### <Fourth embodiment>

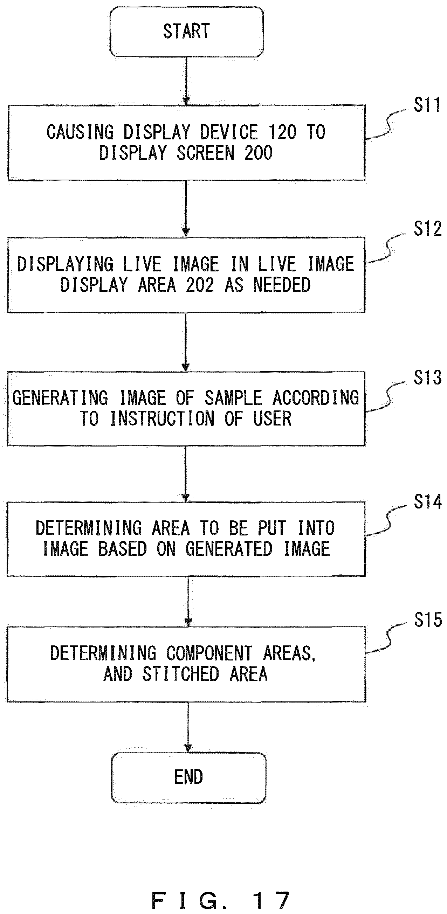

FIG. 17 is a flowchart illustrating steps of a stitched area decision process executed by a microscope system according to this embodiment. The microscope system according to this embodiment is different from the microscope systems according to the first to the third embodiments in that an image of the sample 106 is generated according to an instruction issued from a user and a recommended area is determined on the basis of the generated image of the sample 106. Other points are the same as those of the microscope systems according to the first to the third embodiments. Accordingly, the same components as those of the microscope systems according to the first to the third embodiments are denoted with the same reference numerals in this embodiment.

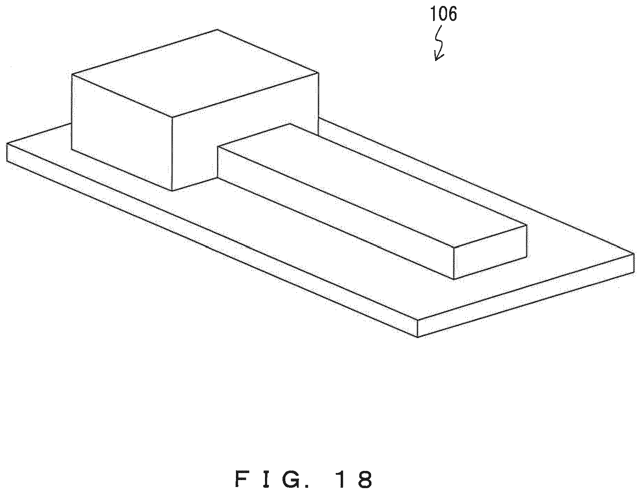

The stitched area decision process executed in the microscope system according to this embodiment is described by taking, as an example, a case where a user captures an image of the sample 106 illustrated in FIG. 18.

Processes in steps S11 and S12 illustrated in FIG. 17 are the same as those in steps S1 and S2 of FIG. 3 executed in the microscope system 1 according to the first embodiment. After the process of step S12, the control device 140 generates an image of the sample 106 according to an instruction issued from the user (step S13 of FIG. 17: a sample image generation process).

In step S13, the user presses the button 205 of the screen 200, so that the control device 140 generates a sample image Ps, which is a still image, from a live image obtained by the live image obtainment unit, and controls the display device 120 to display the sample image Ps in the image display area 201. Note that the sample image Ps may be an image where a shape of the sample 106 is visible. The sample image Ps may be, for example, an image obtained by capturing the image of the entire sample 106 with an objective lens having a low magnification, or the map image illustrated in FIG. 15.

Upon completion of the sample image generation process in step S13, the control device 140 determines a recommended area on the basis of the generated sample image Ps (step S14 of FIG. 17: a recommended area decision process). Namely, the control device 140 is a recommended area decision unit configured to determine a recommended area.

In step S14, the control device 140 initially calculates the shape of the sample 106, which is visible in the sample image Ps, and determines a recommended area on the basis of the calculated shape of the sample 106. As an algorithm for calculating the shape of the sample 106, an arbitrary existing algorithm may be employed. Moreover, parameters (such as height, contrast, brightness, luminance, color, coordinate information and the like) used to calculate the shape may be predetermined or may be specified by a user.

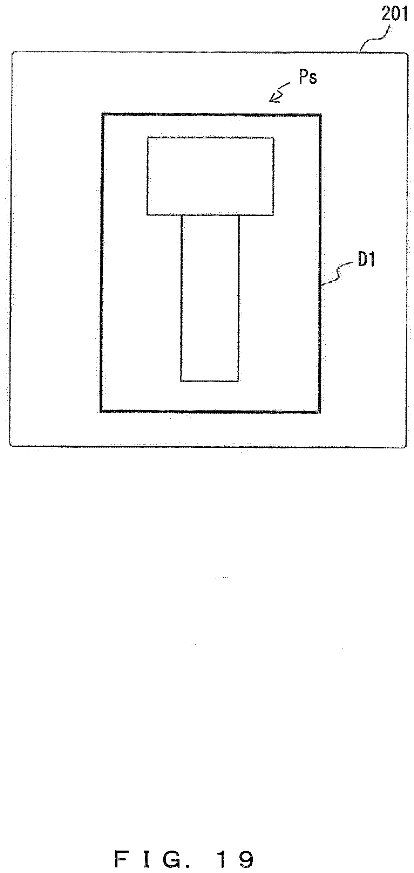

FIG. 19 illustrates a state where the control device 140 determines a recommended area on the basis of the shape of the sample 106. An area D1 is an area in the image display area 201 which corresponds to a recommended area on the sample 106. In FIG. 19, an outline of the area D1 matches that of the sample 106.

Upon completion of the recommended area decision process in step S14, the control device 140 determines component areas, and a stitched area composed of the component areas (S15 of FIG. 17: the component area decision process). Namely, the control device 140 is a component area decision unit configured to determine a component area.

In step S15, the control device 140 arranges, in the form of a grid in the recommended area, a plurality of areas that respectively have the same size as the field of view of the component image obtainment unit and overlap at least part of the recommended area so that the recommended area on the sample 106, which is determined in step S14, is filled. Then, the control device 140 determines the plurality of areas arranged in the form of the grid to be a plurality of component areas.

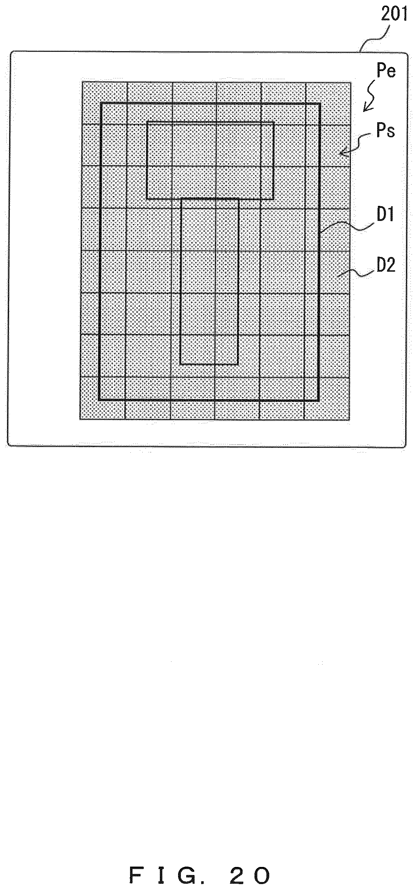

Additionally, as illustrated in FIG. 20, the control device 140 controls the display device 120 to display a position image Pe, which indicates positions of the plurality of component areas, by superimposing the position image Pe on the area D1 corresponding to the recommended area of the image display area 201, and on the sample image Ps. Since the position image Pe is a translucent image, the area D1 corresponding to the recommended area and the sample image Ps can be visually identified through the position image Pe.

Thereafter, when the user again presses the button 211 to issue an instruction to terminate the area decision process, the control device 140 determines the whole area composed of the plurality of component areas to be a stitched area, and terminates the stitched area decision process.

Then, the user presses the button 212 after the stitched area is determined, so that images of the plurality of component areas that configure the stitched area are sequentially captured by the component image obtainment unit in the microscope system 1. As a result, the stitched image where the plurality of thusly obtained component images are stitched is generated.

With the microscope system according to this embodiment, a stitched area is determined on the basis of a shape of a sample. Therefore, an image of a useless area where the sample is not present is prevented from being captured when the stitched image is generated. Accordingly, the length of time needed to obtain component images that configure the stitched image can be reduced. Therefore, with the microscope system, the length of time needed to generate a stitched image can be made to be much shorter than that of conventional techniques.

Additionally, in the microscope system, a recommended area can be specified with a simple operation for capturing an image of a sample. Accordingly, even a user unfamiliar with operations of a microscope can generate a stitched image by easily determining a stitched area with the use of the microscope system.

The above described embodiments refer to specific examples for ease of understanding of the present invention. However, the present invention is not limited to these embodiments. The microscope system and the stitched area decision method and program can be diversely modified and changed within a scope that does not depart from the scope of the present invention laid down by the appended claims.

## Claims

1. A microscope system (1) for generating a stitched image by stitching a plurality of component images, comprising:
a live image obtainment unit configured to obtain a live image of a sample (106), the live image obtainment unit comprising a CCD camera (117) generating a non-confocal live image;
a component image obtainment unit configured to obtain a component image, the component image obtainment unit including an optics system having a scanning unit (103) for scanning the sample (106); and
a field-of-view moving unit (114) configured to move field of views of the live image obtainment unit and the component image obtainment unit relatively to the sample (106);
a display unit (120) configured to display, in a live image display area (202), a live image which is the newest image of an area corresponding to a current field of view of the live image obtainment unit and is a live image of the sample (106) obtained by the live image obtainment unit, and to display, in an image display area (201), an entire area and a position of the area corresponding to the current field of view of the live image obtainment unit in the entire area, wherein the entire area is an area of the sample (106) in which the field of view of the live image obtainment unit moved by the field-of-view moving unit (114) is movable;
a recommended area decision unit (140, 152) configured to determine a recommended area from the entire area, wherein the recommended area is an area to be put into an image as the stitched image according to an instruction of a user, wherein the instruction is made using the image display area (201) in which the position of the area corresponding to the current field of view of the live image obtainment unit has been displayed;
a component area decision unit (140, 153) configured to determine, as a component area from which the component image is obtained, each of a plurality of areas which are arranged in a form of a grid in the recommended area so that the recommended area determined by the recommended area decision unit (140, 152) is filled, the plurality of areas respectively having a same size as the field of view of the component image obtainment unit and overlapping at least part of the recommended area, and to further determine a component area including an area outside the recommended area determined by the recommended area decision unit (140, 152) from among the plurality of areas arranged in the form of the grid as a band scanning area from which the component image is obtained by scanning a partial rectangular area of the band scanning area with the scanning unit (103), and to determine, as a scanning range to be scanned with the scanning unit (103), an area that is a partial rectangular area of the band scanning area and that includes all overlapping portions between the band scanning area and the recommended area; and
a stitched image generating unit configured to generate a stitched image by stitching the plurality of component images obtained by the component image obtainment unit from the plurality of component areas determined by the component area decision unit.

2. The microscope system (1) according to claim 1, wherein
the recommended area decision unit (140, 152) determines the recommended area to be in a shape like a circle or an ellipse, according to an instruction of the user.

3. The microscope system (1) according to claim 1 or 2, wherein
the recommended area decision unit (140, 152) determines, as the recommended area, an inside of an circle that passes through three points in the entire area, which are specified by the user.

4. The microscope system (1) according to claim 1 or 2, wherein
the recommended area decision unit (140, 152) determines, as the recommended area, an inside of an ellipse that passes through five points in the entire area, which are specified by the user.

5. The microscope system (1) according to any of claims 1 to 4, wherein
the component image obtainment unit obtains component images from the band scanning area and a component area that is not the band scanning area, a component image obtained from the band scanning area having a same resolution as a component image obtained from the component area that is not the band scanning area.

6. The microscope system (1) according to claim 1, further comprising
a component area change unit (140, 154) configured to change a component area selected by the user from among the plurality of component areas determined by the component area decision unit (140, 152) to an area that is not a component area.

7. The microscope system (1) according to claim 1, further comprising
a component area change unit (140, 154) configured to change an area, which is not a component area, which has a size of the field of view of the component image obtainment unit and is selected by the user, to the component area.

8. The microscope system (1) according to claim 1, wherein
the recommended area decision unit (140, 152) determines a plurality of recommended areas according to an instruction of a user, and
the component area decision unit (140, 153) determines the plurality of component areas for each of the plurality of recommended areas determined by the recommended area decision unit (140, 152).

9. The microscope system (1) according to claim 1, wherein:
the live image obtainment unit comprises a light source (115), an objective lens (105) for illuminating the sample (106) with light emitted from the light source (115), and the CCD camera (117) having a light-receiving plane at a position optically conjugate with a focal plane of the objective lens (105), and
the live image obtainment unit generates the live image, which is a non-confocal image of the sample (106), with the CCD camera (117); and
the component image obtainment unit comprises a laser light source (101), a two-dimensional scanning unit (103) configured to scan the sample (106) with laser light emitted from the laser light source (101), a pinhole plate (108) on which a pinhole is formed at a position optically conjugate with a focal plane of the objective lens (105), and a photodetector (109) configured to detect the laser light that is reflected on the sample (106) and that passes through the pinhole, and
the component image obtainment unit generates the component image, which is a confocal image of the sample (106), from a detection signal output from the photodetector (109), and information of a position of scanning performed by the two-dimensional scanning unit (103).

10. A method for determining a stitched area of a microscope system (2) that includes a live image obtainment unit, a component image obtainment unit, a field of view moving unit (114) capable to move field of views of the live image obtainment unit and the component image obtainment unit relatively to a sample (106) and a display unit (120), and generates a stitched image by stitching a plurality of component images, the method comprising:
causing the display unit (120) to display, in a live image display area (202), a non-confocal live image which is the newest image of an area corresponding to a current field of view of the live image obtainment unit and is an image of the sample (106) obtained by the live image obtainment unit;
causing the display unit (120) to display, in an image display area (201), an entire area and a position of the area corresponding to the current field of view of the live image obtainment unit in the entire area, wherein the entire area is an area of the sample (106) in which the field of view of the live image obtainment unit is movable;
determining a recommended area from the entire area, wherein the recommended area is an area to be put into an image as the stitched image according to an instruction of a user, wherein the instruction is made using the image display area (201) in which the position of the area corresponding to the current field of view of the live image obtainment unit has been displayed;
determining, as a component area from which the component image obtainment unit obtains the component image, each of a plurality of areas which are arranged in a form of a grid in the recommended area so that the determined recommended area is filled, the plurality of areas respectively having a same size as the field of view of the component image obtainment unit and overlapping at least part of the recommended area;
determining, as a band scanning area from which the component image is obtained by scanning a partial rectangular area of the band scanning area with the band scanning unit (103), a component area including an area outside the recommended area determined by the recommended area descision unit (140, 152) from among the plurality of areas arranged in the form of the grid;
determining, as a scanning range to be scanned with the scanning unit (103), an area that is a partial rectangular area of the band scanning area and that includes all overlapping portions between the band scanning area and the recommended area;
determining an area composed of the plurality of component areas to be the stitched area; and
generating a stitched image by stitching the plurality of component images obtained by the component image obtainment unit from the stitched area by scanning the sample (106).

## Patentansprüche

1. Mikroskopsystem (1) zum Erzeugen eines zusammengesetzten Bildes durch Zusammensetzen einer Vielzahl von Teilbildern, welches umfasst:
eine Livebild-Erstellungseinheit, die dazu ausgebildet ist, ein Livebild einer Probe (106) zu erlangen, wobei die Livebild-Erstellungseinheit eine CCD Kamera (117) aufweist, die ein nicht-konfokales Livebild erzeugt;
eine Teilbild-Erstellungseinheit, die dazu ausgebildet ist, ein Teilbild zu erlangen, wobei die Teilbild-Erstellungseinheit ein optisches System beinhaltet, das eine Abtasteinheit (103) zum Abtasten der Probe (106) hat; und
eine Sichtbereich-Bewegungseinheit (114), die dazu ausgebildet ist, Sichtbereiche der Livebild-Erstellungseinheit und der Teilbild-Erstellungseinheit relativ zu der Probe (106) zu bewegen;
eine Anzeigeeinheit (120), die dazu ausgebildet ist, in einem Livebildanzeigebereich (202) ein Livebild anzuzeigen, das das neueste Bild eines Bereichs ist, der einem aktuellen Sichtbereich der Livebild-Erstellungseinheit entspricht und ein Livebild der Probe (106) ist, das durch die Livebild-Erstellungseinheit erlangt wird, und in einem Bildanzeigebereich (201) einen gesamten Bereich und eine Lage des Bereichs anzuzeigen, der dem aktuellen Sichtbereich der Livebild-Erstellungseinheit in dem gesamten Bereich entspricht, wobei der gesamte Bereich ein Bereich der Probe (106) ist, in dem der Sichtbereich der Livebild-Erstellungseinheit, der von der Sichtbereich-Bewegungseinheit (114) bewegt wird, bewegbar ist;
eine Entscheidungseinheit für einen empfohlenen Bereich (140, 152), die dazu ausgebildet ist, einen empfohlenen Bereich aus dem gesamten Bereich zu bestimmen, wobei der empfohlene Bereich ein Bereich ist, der gemäß einer Benutzeranweisung in ein Bild als das zusammengesetzte Bild eingesetzt werden soll, wobei die Anweisung durch Benutzen des Bildanzeigebereichs (201) gemacht wird, in dem die Lage des Bereichs angezeigt worden ist, der dem aktuellen Sichtbereich der Livebild-Erstellungseinheit entspricht;
eine Teilbereich-Entscheidungseinheit (140, 153), die dazu ausgebildet ist, als einen Teilbereich, von dem das Teilbild erlangt wird, jeden Bereich einer Vielzahl von Bereichen zu bestimmen, die gitterförmig in dem empfohlenen Bereich so angeordnet sind, dass der von der Entscheidungseinheit für den empfohlenen Bereich (140, 152) bestimmte empfohlene Bereich ausgefüllt wird, dass die Vielzahl von Bereichen jeweils eine gleiche Größe wie das Sichtfeld der Teilbild-Erstellungseinheit haben und wenigstens einen Teil des empfohlenen Bereichs überlappen, und wobei die Teilbereich-Entscheidungseinheit (140, 153) ferner dazu ausgebildet ist, einen Teilbereich als einen Bandabtastbereich aus der Vielzahl von gitterförmig angeordneten Bereichen zu bestimmen, der einen Bereich außerhalb des empfohlenen Bereichs beinhaltet, der von der Entscheidungseinheit für einen empfohlenen Bereich (140, 152) bestimmt wurde, wobei aus dem Bandabtastbereich das Teilbild durch Abtasten eines rechteckigen Teilbereichs des Bandabtastbereichs mit der Abtasteinheit (103) erlangt wird, und wobei die Teilbereich-Entscheidungseinheit (140, 153) dazu ausgebildet ist, einen Bereich, der ein rechteckiger Teilbereich des Bandabtastbereichs ist und der alle überlappenden Bereiche zwischen dem Bandabtastbereich und dem empfohlenen Bereich beinhaltet, als einen Abtastbereich zu bestimmen, der mit der Abtasteinheit (103) abgetastet werden soll; und
eine Erzeugungseinheit für ein zusammengesetztes Bild, die dazu ausgebildet ist, ein zusammengesetztes Bild durch Zusammensetzen der Vielzahl von Teilbildern zu erzeugen, die von der Teilbild-Erstellungseinheit aus der Vielzahl von Teilbereichen erlangt wurden, die von der Teilbereich-Entscheidungseinheit bestimmt wurden.

2. Mikroskopsystem (1) nach Anspruch 1, bei dem
die Entscheidungseinheit für einen empfohlenen Bereich (140, 152) den empfohlenen Bereich als kreisförmig oder ellipsenförmig zu sein bestimmt, gemäß einer Benutzeranweisung.

3. Mikroskopsystem (1) nach Anspruch 1 oder 2, bei dem
die Entscheidungseinheit für einen empfohlenen Bereich (140, 152) ein Inneres eines Kreises, der durch drei vom Benutzer angegebene Punkte in dem gesamten Bereich geht, als den empfohlenen Bereich bestimmt.

4. Mikroskopsystem (1) nach Anspruch 1 oder 2, bei dem
die Entscheidungseinheit für einen empfohlenen Bereich (140, 152) ein Inneres einer Ellipse, die durch fünf vom Benutzer angegebene Punkte in dem gesamten Bereich geht, als den empfohlenen Bereich bestimmt.

5. Mikroskopsystem (1) nach einem der Ansprüche 1 bis 4, bei dem
die Teilbild-Erstellungseinheit Teilbilder von dem Bandabtastbereich und einem Teilbereich, der nicht der Bandabtastbereich ist, erlangt, wobei ein aus dem Bandabtastbereich erlangtes Teilbild die gleiche Auflösung hat wie ein aus dem Teilbereich erlangtes Teilbild, der nicht der Bandabtastbereich ist.

6. Mikroskopsystem (1) nach Anspruch 1, wobei dieses ferner umfasst
eine Teilbereich-Änderungseinheit (140, 154), die dazu ausgebildet ist, einen vom Benutzer aus der Vielzahl von der Teilbereich-Bestimmungseinheit (140, 152) bestimmten Teilbereichen ausgewählten Teilbereich in einen Bereich zu verändern, der kein Teilbereich ist.

7. Mikroskopsystem (1) nach Anspruch 1, wobei dieses ferner umfasst
eine Teilbereich-Änderungseinheit (140, 154), die dazu ausgebildet ist, einen Bereich, der kein Teilbereich ist, der eine Größe des Sichtfeldes der Teilbild-Erstellungseinheit hat und vom Benutzer ausgewählt ist, in den Teilbereich zu ändern.

8. Mikroskopsystem (1) nach Anspruch 1, bei dem
die Entscheidungseinheit für einen empfohlenen Bereich (140, 152) eine Vielzahl von empfohlenen Bereichen gemäß einer Benutzeranweisung bestimmt, und
die Teilbereich-Entscheidungseinheit (140, 153) die Vielzahl von Teilbereichen für jeden empfohlenen Bereich der Vielzahl von empfohlenen Bereichen bestimmt, die von der Entscheidungseinheit für einen empfohlenen Bereich (140, 152) bestimmt wurden.

9. Mikroskopsystem (1) nach Anspruch 1, bei dem:
die Livebild-Erstellungseinheit eine Lichtquelle (115) aufweist, sowie eine Objektivlinse (105) zum Beleuchten der Probe (106) mit von der Lichtquelle (115) abgestrahltem Licht, und wobei die CCD Kamera (117) an einer zu einer Brennebene der Objektivlinse (105) optisch konjugierten Position eine lichtempfangende Ebene hat, und
die Livebild-Erstellungseinheit mit der CCD Kamera (117) das Livebild erzeugt, das ein nicht konfokales Bild der Probe (106) ist; und
die Teilbild-Erstellungseinheit eine Laserlichtquelle (101) aufweist, sowie eine zwei-dimensionale Abtasteinheit (103), die dazu ausgebildet ist, die Probe (106) mit dem von der Laserlichtquelle (101) abgestrahlten Laserlicht abzutasten, sowie eine Aperturblendeplatte (108), auf der eine Aperturblende an einer Stelle geformt ist, die optisch zu einer Brennebene der Objektivlinse (105) konjugiert ist, sowie einen Photodetektor (109), der dazu ausgebildet ist, das Laserlicht, das an der Probe reflektiert wird und die Aperturblende durchläuft, zu detektieren, und
die Teilbild-Erstellungseinheit das Teilbild aus einem vom Photodetektor ausgegebenen Erkennungssignal erzeugt, wobei das Teilbild ein konfokales Bild der Probe (106) ist, sowie Information bezüglich einer Position eines von der zweidimensionalen Abtasteinheit (103) durchgeführten Abtastens erzeugt.

10. Verfahren zum Bestimmen eines zusammengesetzten Bereichs eines Mikroskopsystems (2), das eine Livebild-Erstellungseinheit, eine Teilbild-Erstellungseinheit, eine Sichtfeld-Bewegungseinheit (114), die fähig ist, Sichtfelder der Livebild-Erstellungseinheit und der Teilbild-Erstellungseinheit relativ zu einer Probe zu bewegen, und eine Anzeigeeinheit (120) beinhaltet, und das ein zusammengesetztes Bild durch Zusammensetzen einer Vielzahl von Teilbildern erzeugt, wobei das Verfahren umfasst:
Bewirken, dass die Anzeigeeinheit (120) in einem Livebildanzeigebereich (202) ein nicht-konfokales Livebild anzeigt, das das neueste Bild eines Bereichs ist, der einem aktuellen Sichtbereich der Livebild-Erstellungseinheit entspricht und ein Livebild der Probe (106) ist, das durch die Livebild-Erstellungseinheit erlangt wird;
Bewirken, dass die Anzeigeeinheit (129) in einem Bildanzeigebereich (201) einen gesamten Bereich und eine Lage des Bereichs anzeigt, der dem aktuellen Sichtbereich der Livebild-Erstellungseinheit in dem gesamten Bereich entspricht, wobei der gesamte Bereich ein Bereich der Probe (106) ist, in dem der Sichtbereich der Livebild-Erstellungseinheit, der von der Sichtbereich-Bewegungseinheit (114) bewegt wird, bewegbar ist;
Bestimmen eines empfohlenen Bereichs aus dem gesamten Bereich, wobei der empfohlene Bereich ein Bereich ist, der gemäß einer Benutzeranweisung in ein Bild als das zusammengesetzte Bild eingesetzt werden soll, wobei die Anweisung durch Benutzen des Bildanzeigebereichs (201) gemacht wird, in dem die Lage des Bereichs angezeigt worden ist, der dem aktuellen Sichtbereich der Livebild-Erstellungseinheit entspricht;
Bestimmen, als einen Teilbereich, von dem das Teilbild von der Teilbild-Erzeugungseinheit erlangt wird, jeden Bereich einer Vielzahl von Bereichen, die gitterförmig in dem empfohlenen Bereich so angeordnet sind, dass der von der Entscheidungseinheit für den empfohlenen Bereich (140, 152) bestimmte empfohlene Bereich ausgefüllt wird, dass die Vielzahl von Bereichen jeweils eine gleiche Größe wie das Sichtfeld der Teilbild-Erstellungseinheit haben und wenigstens einen Teil des empfohlenen Bereichs überlappen;
Bestimmen, als einen Bandabtastbereich, aus dem das Teilbild durch Abtasten eines rechteckigen Teilbereichs des Bandabtastbereichs mit der Abtasteinheit (103) erlangt wird, einen Teilbereich aus der Vielzahl von gitterförmig angeordneten Bereichen, der einen Bereich außerhalb des empfohlenen Bereichs beinhaltet, der von der Entscheidungseinheit für einen empfohlenen Bereich (140, 152) bestimmt wurde;
Bestimmen, als einen Abtastbereich, der mit der Abtasteinheit (103) abgetastet werden soll, einen Bereich, der ein rechteckiger Teilbereich des Bandabtastbereichs ist und der alle überlappenden Bereiche zwischen dem Bandabtastbereich und dem empfohlenen Bereich beinhaltet; und
Bestimmen eines Bereichs, der sich aus der Vielzahl von Teilbereichen zusammensetzt, dazu, der zusammengesetzte Bereich zu sein; und
Erzeugen eines zusammengesetzten Bildes durch Zusammensetzen der Vielzahl von Teilbildern, die von der Teilbild-Erstellungseinheit aus dem zusammengesetzten Bereich durch Abtasten der Probe (106) erlangt wurden.

## Revendications

1. Système (1) de microscope pour générer une image piquée en piquant une pluralité d'images composantes, comprenant :
une unité d'obtention d'image réelle configurée pour obtenir une image réelle d'un échantillon (106), l'unité d'obtention d'image réelle comprenant une caméra CCD (117) générant une image réelle non confocale ;
une unité d'obtention d'image composante configurée pour obtenir une image composante, l'unité d'obtention d'image composante incluant un système d'optique ayant une unité (103) de balayage pour balayer l'échantillon (106) ; et
une unité (114) de déplacement de champ de vision configurée pour déplacer un champ de vision de l'unité d'obtention d'image réelle et de l'unité d'obtention d'image composante par rapport à l'échantillon (106) ;
une unité (120) d'affichage configurée pour afficher, dans une zone (202) d'affichage d'image réelle, une image réelle qui est l'image la plus récente d'une zone correspondant à un champ de vision courant de l'unité d'obtention d'image réelle et est une image réelle de l'échantillon (106) obtenue par l'unité d'obtention d'image réelle, et pour afficher, dans une zone (201) d'affichage d'image, la totalité d'une zone et une position de la zone correspondant au champ de vision courant de l'unité d'obtention d'image réelle dans la totalité de la zone, dans lequel la totalité de la zone est une zone de l'échantillon (106) dans laquelle le champ de vision de l'unité d'obtention d'image réelle déplacé par l'unité (114) de déplacement de champ de vision peut être déplacé ;
une unité (140, 152) de décision de zone recommandée configurée pour déterminer une zone recommandée à partir de la totalité de la zone, dans lequel la zone recommandée est une zone à mettre dans une image comme l'image piquée conformément à une instruction d'un utilisateur, dans lequel l'instruction est effectuée en utilisant la zone (201) d'affichage d'image dans laquelle la position de la zone correspondant au champ de vision courant de l'unité d'obtention d'image réelle a été affichée ;
une unité (140, 153) de décision de zone composante configurée pour déterminer, comme une zone composante à partir de laquelle l'image composante est obtenue, chacune d'une pluralité de zones qui sont agencées sous la forme d'une grille dans la zone recommandée de telle sorte que la zone recommandée déterminée par l'unité (140, 152) de décision de zone recommandée est remplie, la pluralité de zones ayant respectivement une même taille que le champ de vision de l'unité d'obtention d'image composante et chevauchant au moins une partie de la zone recommandée, et pour déterminer en outre une zone composante incluant une zone à l'extérieur de la zone recommandée déterminée par l'unité (140, 152) de décision de zone recommandée parmi la pluralité de zones agencées sous la forme de la grille comme une zone de balayage en bandes à partir de laquelle l'image composante est obtenue en balayant une zone rectangulaire partielle de la zone de balayage en bandes avec l'unité (103) de balayage, et pour déterminer, comme une plage de balayage devant être balayée avec l'unité (103) de balayage, une zone qui est une zone rectangulaire partielle de la zone de balayage en bandes et qui inclut toutes les parties se chevauchant entre la zone de balayage en bandes et la zone recommandée ; et
une unité de génération d'image piquée configurée pour générer une image piquée en piquant la pluralité d'images composantes obtenues par l'unité d'obtention d'image composante à partir de la pluralité de zones composantes déterminées par l'unité de décision de zone composante.

2. Système (1) de microscope selon la revendication 1, dans lequel
l'unité (140, 152) de décision de zone recommandée détermine la zone recommandée de façon à ce qu'elle soit d'une forme comme un cercle ou une ellipse, conformément à une instruction de l'utilisateur.

3. Système (1) de microscope selon la revendication 1 ou 2, dans lequel
l'unité (140, 152) de décision de zone recommandée détermine, comme la zone recommandée, un intérieur d'un cercle qui passe par trois points dans la totalité de la zone, qui sont spécifiés par l'utilisateur.

4. Système (1) de microscope selon la revendication 1 ou 2, dans lequel
l'unité (140, 152) de décision de zone recommandée détermine, comme la zone recommandée, un intérieur d'une ellipse qui passe par cinq points dans la totalité de la zone, qui sont spécifiés par l'utilisateur.

5. Système (1) de microscope selon l'une quelconque des revendications 1 à 4, dans lequel
l'unité d'obtention d'image composante obtient des images composantes à partir de la zone de balayage en bandes et d'une zone composante qui n'est pas la zone de balayage en bandes, une image composante obtenue à partir de la zone de balayage en bandes ayant une même résolution qu'une image composante obtenue à partir de la zone composante qui n'est pas la zone de balayage en bandes.

6. Système (1) de microscope selon la revendication 1, comprenant en outre
une unité (140, 154) de changement de zone composante configurée pour changer une zone composante sélectionnée par l'utilisateur parmi la pluralité de zones composantes déterminées par l'unité (140, 152) de décision de zone composante pour une zone qui n'est pas une zone composante.

7. Système (1) de microscope selon la revendication 1, comprenant en outre
une unité (140, 154) de changement de zone composante configurée pour changer une zone, qui n'est pas une zone composante, qui a une taille du champ de vision de l'unité d'obtention d'image composante et est sélectionnée par l'utilisateur, pour la zone composante.

8. Système (1) de microscope selon la revendication 1, dans lequel
l'unité (140, 152) de décision de zone recommandée détermine une pluralité de zones recommandées conformément à une instruction d'un utilisateur, et
l'unité (140, 153) de décision de zone composante détermine la pluralité de zones composantes pour chacune de la pluralité de zones recommandées déterminées par l'unité (140, 152) de décision de zone recommandée.

9. Système (1) de microscope selon la revendication 1, dans lequel :
l'unité d'obtention d'image réelle comprend une source (115) de lumière, un objectif (105) pour éclairer l'échantillon (106) avec une lumière émise depuis la source (115) de lumière, et la caméra CCD (117) ayant un plan de réception de lumière en une position optiquement conjuguée avec un plan focal de l'objectif (105), et
l'unité d'obtention d'image réelle génère l'image réelle, qui est une image non confocale de l'échantillon (106), avec la caméra CCD (117) ; et
l'unité d'obtention d'image composante comprend une source (101) de lumière laser, une unité (103) de balayage bidimensionnel configurée pour balayer l'échantillon (106) avec une lumière laser émise depuis la source (101) de lumière laser, une plaque sténopéique (108) sur laquelle un sténopé est formé en une position optiquement conjuguée avec un plan focal de l'objectif (105), et un photodétecteur (109) configuré pour détecter la lumière laser qui est réfléchie sur l'échantillon (106) et qui passe à travers le sténopé, et
l'unité d'obtention d'image composante génère l'image composante, qui est une image confocale de l'échantillon (106), à partir d'un signal de détection délivré en sortie du photodétecteur (109), et d'une information d'une position de balayage effectué par l'unité (103) de balayage bidimensionnel.

10. Procédé de détermination d'une zone piquée d'un système (2) de microscope qui inclut une unité d'obtention d'image réelle, une unité d'obtention d'image composante, une unité (114) de déplacement de champ de vision apte à déplacer un champ de vision de l'unité d'obtention d'image réelle et de l'unité d'obtention d'image composante par rapport à un échantillon (106) et une unité (120) d'affichage, et génère une image piquée en piquant une pluralité d'images composantes, le procédé comprenant les étapes consistant à :
faire afficher par l'unité (120) d'affichage, dans une zone (202) d'affichage d'image réelle, une image réelle non confocale qui est l'image la plus récente d'une zone correspondant à un champ de vision courant de l'unité d'obtention d'image réelle et est une image réelle de l'échantillon (106) obtenue par l'unité d'obtention d'image réelle ;
faire afficher par l'unité (120) d'affichage, dans une zone (201) d'affichage d'image, la totalité d'une zone et une position de la zone correspondant au champ de vision courant de l'unité d'obtention d'image réelle dans la totalité de la zone, dans lequel la totalité de la zone est une zone de l'échantillon (106) dans laquelle le champ de vision de l'unité d'obtention d'image réelle peut être déplacé ;
déterminer une zone recommandée à partir de la totalité de la zone, dans lequel la zone recommandée est une zone à mettre dans une image comme l'image piquée conformément à une instruction d'un utilisateur, dans lequel l'instruction est effectuée en utilisant la zone (201) d'affichage d'image dans laquelle la position de la zone correspondant au champ de vision courant de l'unité d'obtention d'image réelle a été affichée ;
déterminer, comme une zone composante à partir de laquelle l'unité d'obtention d'image composante obtient l'image composante, chacune d'une pluralité de zones qui sont agencées sous la forme d'une grille dans la zone recommandée de telle sorte que la zone recommandée est remplie, la pluralité de zones ayant respectivement une même taille que le champ de vision de l'unité d'obtention d'image composante et chevauchant au moins une partie de la zone recommandée ;
déterminer, comme une zone de balayage en bandes à partir de laquelle l'image composante est obtenue en balayant une zone rectangulaire partielle de la zone de balayage en bandes avec l'unité (103) de balayage en bandes, une zone composante incluant une zone à l'extérieur de la zone recommandée déterminée par l'unité (140, 152) de décision de zone recommandée parmi la pluralité de zones agencées sous la forme de la grille ;
déterminer, comme une plage de balayage à balayer avec l'unité (103) de balayage, une zone qui est une zone rectangulaire partielle de la zone de balayage en bandes et qui inclut toutes les parties se chevauchant entre la zone de balayage en bandes et la zone recommandée ;
déterminer une zone composée de la pluralité de zones composantes pour être la zone piquée ; et
générer une image piquée en piquant la pluralité d'images composantes obtenues par l'unité d'obtention d'image composante à partir de la zone piquée en balayant l'échantillon (106).
